# EUROPÄISCHE PATENTSCHRIFT

(11) **EP 1 626 885 B1**
(45) Veröffentlichungstag und Bekanntmachung des Hinweises auf die Patenterteilung: **03.02.2016**
(21) Anmeldenummer: 04741595.5
(22) Anmeldetag: 18.05.2004
(51) Int. Cl.: B60T 8/00, B60T 7/12, B60T 17/22, B60T 13/66, B60T 13/74, F16D 55/00, F16D 65/00

(54) **VERFAHREN ZUM WIEDERHERSTELLEN, STABILISIEREN UND ERHALTEN DES REIBWERTES VON BREMSBELÄGEN**
METHOD FOR RESTORING, STABILIZING AND MAINTAINING THE COEFFICIENT OF FRICTION OF BRAKE LININGS
PROCEDE DE RESTAURATION, DE STABILISATION ET DE CONSERVATION DU COEFFICIENT DE FROTTEMENT DE GARNITURES DE FREINS

(30) Priorität: 19.05.2003 DE 10322451
(43) Veröffentlichungstag der Anmeldung: 22.02.2006
(73) Patentinhaber: Continental Teves AG & Co. oHG, 60488 Frankfurt am Main (DE)
(72) Erfinder: HALASY-WIMMER, Georg, 71706 Markgröningen (DE); LINHOFF, Paul, 61267 Neu-Anspach (DE); THIESING, Jochen, 55252 Mainz-Kastel (DE); MARON, Christof, 65779 Kelkheim (DE); VÖLKEL, Jürgen, 60486 Frankfurt am Main (DE)
(86) Internationale Anmeldenummer: PCT/EP2004/050843
(87) Internationale Veröffentlichungsnummer: WO 2004/101338

(56) Entgegenhaltungen:
- WO-A-00/55024
- WO-A-02/46016
- WO-A-02/083473
- DE-A- 10 139 908
- DE-A- 10 248 852
- DE-A- 19 730 094
- DE-A- 19 916 700
- DE-A1- 10 052 081
- DE-A1- 19 903 757
- DE-C- 4 427 170
- US-B1- 6 378 669
- US-B2- 6 409 289

## Beschreibung

Ob es zu einem Unfall und dem damit zusammenhängenden Schaden kommt hängt oft von der Verkürzung des Bremsweges um nur sehr kurze Strecken ab. Neben einer Reihe von anderen Faktoren ist es daher sehr wichtig, dass die Funktion der Bremsanlage ( z.B. Betriebsbremse eines Fahrzeuges) optimal ist. Dies gilt auch für Bremsvorgänge, die üblicherweise nur eine reine Festhaltefunktion erfüllen, wie z. B. die Feststellbremsanlage eines Fahrzeuges oder die Haltebremse einer Fahrkabine eines Fahrstuhles.

Aus der DE 19947903 A1 ist es bekannt, dass sich die Wirkung einer Bremse für einen möglichen zukünftigen Bremsvorgang dadurch verbessern lässt, dass man vorsorglich die Beläge der Bremse durch Reibung trocknet. Entsprechendes gilt für das vorsorgliche Entfernen einer auf dem Belag oder dem Reibpartner (z. B. Bremsscheibe) befindlichen Schmutzschicht.

Die WO 02/083473 A1 betrifft eine Betriebsbremsung mit erhöhter Energie, die ein Verfahren gemäß dem Oberbegriff des unabhängigen Anspruchs 1 darstellt.

Es hat sich nun gezeigt, dass nicht nur äußere fremde Materialien auf den Bremsbelägen die Wirkung der Bremse herabsetzen können sondern dass auch der Reibwert eines Bremsbelages selbst unterschiedlich sein kann. Dies gilt beispielsweise dann, wenn ein Bremsbelag noch nicht eingefahren ist, wenn er einen Schrägverschleiß zeigt oder wenn er aufgrund chemischer Einflüsse seine Oberfläche ändert. Derartige Einflüsse können den Reibwert eines Bremsbelages um 20% und mehr ändern mit den unter Umständen negativen Folgen bei einem möglichen Bremsvorgang.

Die vorliegende Erfindung geht daher aus von einem Verfahren der sich aus dem Oberbegriff des Anspruchs eins ergebenden Gattung. Aufgabe der Erfindung ist es den Reibwert eines Bremsbelages unter bestimmten Voraussetzungen zu verbessern und in den Nennbereich des Reibwertes zu führen oder zurück zu führen. Hierbei ist es unerheblich, ob sich um eine Betriebsbremsanlage, kombinierte Betriebs- und Feststellbremsanlage oder um eine reine Feststellbremsanlage handelt.

Die Aufgabe wird durch die sich aus dem kennzeichnenden Teil des Anspruchs 1 ergebende Merkmalskombination gelöst. Die Erfindung besteht im Prinzip also darin festzustellen, ob ein bestimmter erster Zustand (erster Parameter) eingetreten ist, nach Feststellung dieses ersten Parameters bestimmte vorgegebene Maßnahmen zu ergreifen (Programm) und nach der Feststellung des zweiten Parameters das Programm zu beenden.

Eine wichtige Größe, die einen Bremsbelag seinen optimalen Reibwert noch nicht erreichen lässt ist der, dass der Bremsbelag noch nicht eingefahren ist. Bremsbeläge erreichen erst nach einem Einfahrprozess ihren Betriebsreibwert. Somit erhöht sich die erforderliche Zuspannkraft/Druck für eine definierte Verzögerung bis der Betriebsreibwert erreicht wird.

Vorteilhafte Weiterbildungen der Erfindung werden in den abhängigen Ansprüche 2 bis 8 dargestellt.

Das Programm wird beispielsweise eingeschaltet, wenn das Fahrzeug neue Bremsbeläge aufweist, sei es das die Bremsbeläge der Erstausrüstung noch neu sind oder die Bremsbeläge gerade ausgetauscht wurden. Als weitere Bedingung für den Eintritt des ersten Parameters kann hinzukommen, dass das Fahrzeug bewegt wird so dass das Programm eingeschaltet wird, sobald das Fahrzeug sich das erste Mal oder nach Neuinstallation oder Austausch der Bremsbelege bewegt, was sich beispielsweise durch den Geschwindigkeitsmesser feststellen lässt.

Den zweiten Parameter kann man wie folgt festlegen: das Programm läuft
a) nur über einen definierten Zeitraum, z.B. max. 2 Monate nach Inbetriebnahme des Fahrzeuges und/oder
b) innerhalb einer/s definierten Wegstrecke/Kilometerstandes, z.B.> 0 Km Beginn, 500 km Ende).

Für die Feststellung des zweiten Parameters ist eine Kombination aus Zeit / Wegstrecke zur Deaktivierung des Programms ebenfalls möglich. Nach dem Bremsbelagwechsel kann ebenfalls eine Aktivierung bzw. Deaktivierung nach obigen Kriterien ausgelöst werden. Die Erkennung des Belagwechsels und die Art des eingewechselten Belages ist über eine Codierung am Bremsbelag oder durch Eingabe an einem geeignetem Steuergerät (ECU) möglich. Die Festlegung des zweiten Parameters, die Form des Programms selbst sowie seine Beendigung kann durch Online Update nach den Vorschriften des Herstellers in das Fahrzeug eingegeben werden. Hierdurch sind auch Eingaben von Änderungen für Programmablauf und Parameter aufgrund neuerer Erkenntnisse des Herstellers möglich (Software Update).

Der zweite Parameter und damit die Deaktivierung des Systems lässt sich auch dann auslösen wenn eine vorgegebene Relation Zuspannkraft bzw. Druck zu Verzögerung erreicht wird (optional wenn Verzögerungssensoren vorhanden). Zur Bestimmung der Verzögerung können auch Beschleunigungsmesser verwendet werden wie sie im Zusammenhang mit geregelten Bremssystemen eingesetzt werden. Evtl. kann eine Deaktivierung geschehen wenn bei einer elektrischen Parkbremse (EPB) eine vorgegebene Relation Zuspannkraft bzw. Druck zu Hangneigung erkannt wird. Damit ist gemeint, dass beispielsweise bei Parkbremsen eine bestimmte Zuspannkraft bzw. hydraulischer Druck in Abhängigkeit von einem NeigungsWinkel/Gewichtskraft so eingestellt wird, dass das Fahrzeug gerade nicht los fährt. Hat man hier eine über dem Sollwert liegende Kraft, so ist der Reibwert noch nicht optimal. Dieses Verfahren ist besonders günstig, wenn bei dem Fahrzeug ohnedies ein Neigungssensor vorhanden ist.

Ein dritter Parameter beschränkt den Anlauf des Programms bei Vorliegen des ersten Parameters auf die folgenden zusätzlichen Randbedingungen bzw. beeinflusst den Ablauf des Programms:
- Zuspannkraft/Bremsdruck während Einfahrbremsung ohne das eine merkliche Fahrzeugverzögerung eintritt;
- Bremsungen wiederholen sich zyklisch nach einem festzulegenden Raster, z.B. während Fahrbetriebes alle 5 min, oder alle 5 km. Über einen Zähler (z.B. Bremslichtschalter als Trigger) können auch die vom Fahrer durchgeführten Bremsungen Einfluss auf die Häufigkeit der Einlaufbremsungen haben;
- Bis zu einer definierten Geschwindigkeit, (z.B. < 100km/h bei Fahrzeug bzw. < 10 m/s, vorzugsweise < 5m/s, beim Fahrstuhl);
- Nicht bei Kurvenfahrt im Fahrzeug (optional wenn Lenkwinkelsensor vorhanden);
- Nicht bei Temperaturen der Reibpaarung> 200°C (Erkennung z.B über Software Temperaturmodell oder Temperaturfühler);
- Nicht während Bremsung durch den Fahrer im Fahrzeug;
- Nicht während einer Bremsung im Handbetrieb oder während einer Notbremsung.

Eine weitere wichtige Größe die einen Bremsbelag seinen optimalen Reibwert noch nicht erreichen lässt ist der, dass der Bremsbelag einen Schrägverschleiß besitzt. Aufgrund von Schrägverschleiß nimmt der Zuspann- bzw. Kolbenweg für eine definierte Spannkraft zu, d.h. die Steifigkeitskennlinie des Systems wird flacher.

Den zur Auslösung des Programms dienenden ersten Parameter kann man wie folgt messen: Durch eine im System hinterlegte Steifigkeitskennlinie (Zuspannkraft / Druck zu Kolbenweg) wird erkannt wann die Schrägverschleiß-Rückbildung aktiviert werden muss. Wenn die Messwerte wieder der abgelegten Kennlinie entsprechen wird gilt der zweite Parameter als eingetreten und das Programm für die Regenerierung wird abgeschlossen. Eine erneute Aktivierung ist, wenn die Parameter der Steifigkeitskennlinie nicht entsprechen jederzeit möglich.

Aufgrund eventuell anderer Belagkompressibilitäten nach einem Bremsbelagwechsel lässt sich die Steifigkeitskennlinie erkennen. Die Erkennung geschieht über die Codierung des Bremsbelages oder über händische Eingabe an einem Steuergerät. Der oben beschriebene Online Update ist wiederum möglich.

Die Rückbildung von Schrägverschleiß findet unter folgenden Rahmenbedingungen statt.
- Zuspannkraft /Bremsdruck zur Schrägverschleißrückbildung wird so gewählt dass keine merkliche Fahrzeugverzögerung eintritt;
- Bremsungen wiederholen sich zyklisch nach einem festzulegenden Raster, z.B. während Fahrbetrieb alle 5 min, oder alle 5 km. Über einen Zähler (z.B. Bremslichtschalter als Trigger) können auch die vom Fahrer durchgeführten Bremsungen Einfluss auf die Häufigkeit der Schrägverschleißrückbildung haben;
- Bis zu einer definierten Geschwindigkeit ist der Betrieb des Programms zulässig, z.B. v < 100km/h oder v < 10 m/s, vorzugsweise v < 5 m/s;
- Kein automatisches Bremsen bei Kurvenfahrt im Fahrzeug (optional wenn Lenkwinkelsensor vorhanden);
- Kein automatisches Bremsen bei Reibtemperaturen > 200°C (Erkennung z.B. über Software Temperaturmodell oder Sensor) ;
- Nicht während Bremsung durch den Fahrer (Fahrzeug);
- Nicht wenn Bremsbeläge verschlissen sind (optional wenn Wegsensor oder Belagverschleißanzeige).

Eine zusätzliche wichtige Größe die einen Bremsbelag seinen optimalen Reibwert nicht erreichen lässt ist die, dass aufgrund von unzureichender Nutzung der Bremsanlage der Bremsbelag nicht mehr seinen Betriebsreibwert erreicht (,verglasen', 'Einschlafen' der Beläge). Dies geschieht durch chemische Vorgänge an der Oberfläche des Belages. Hierbei erhöht sich die erforderliche Zuspannkraft bzw. Druck für eine definierte Verzögerung.

Der das Programm auslösende erste Parameter sowie der das Programm schließende zweite Parameter lassen sich hierbei wie folgt bestimmen. Durch eine im System hinterlegte Kennlinie 'Zuspannkraft zu Verzögerung oder Gewichtskraft' wird erkannt wann aufgrund eines ,eingeschlafenen' Belages die Bremsbeläge regeneriert werden müssen. Wenn die Messwerte Zuspannkraft/Druck zur Verzögerung wieder der abgelegten Kennlinie entsprechen, gilt der zweite Parameter als eingetreten und die Regenerierung wird abgeschlossen. Eine Aktivierung des Programms ist ebenfalls möglich, wenn bei der Betätigung einer elektrischen Parkbremse (EPB) der hinterlegten Kennlinie (Zuspannkraft bzw. Druck zur Hangneigung) nicht entsprochen wird. Dies wurde weiter oben bereits erläutert. Eine Deaktivierung des Programms geschieht, wenn die Messwerte wieder der Kennlinie bei EPB Betätigung entsprechen. Eine erneute Aktivierung des Programms ist, wenn die gemessenen Ist-Werte der Kennlinie nicht entsprechen, jederzeit wieder möglich. Nach Bremsbelagwechsel aufgrund eventuell anderer Belag-Reibwerte wird die Kennlinie aktualisiert (Erkennung über Codierung Bremsbelag, Online Update oder separate Eingabe am Steuergerät wie weiter oben schon beschrieben).

Das Regenerieren von Bremsbelägen findet unter folgenden Rahmenbedingungen statt (dritter Parameter bzw. Programm).
- Zuspannkraft /Bremsdruck während Regenerierbremsung ohne dass eine merkliche Fahrzeugverzögerung eintritt;
- Bremsungen wiederholen sich zyklisch nach einem festzulegenden Raster, z.B. während Fahrbetrieb alle 5 min, oder alle 5 km. Über einen Zähler (z.B. Bremslichtschalter als Trigger) können auch die vom Fahrer durchgeführten Bremsungen Einfluss auf die Häufigkeit der Regenerierbremsungen haben;
- Bis zu einer definierten Geschwindigkeit, z.B. v < 100km/h (bei Fahrzeugen) bzw. v < 10m/s, vorzugsweise v < 5m/s, (bei Fahrstühlen);
- Nicht bei Kurvenfahrt (optional wenn Lenkwinkelsensor vorhanden);
- Nicht bei Reibtemperaturen > 200°C (Erkennung z. B. über Software Temperaturmodell);
- Nicht während der Bremsung durch den Fahrer (inklusive Handbetrieb sowie Not- oder Sicherheitsbremsung);
- Nicht wenn Bremsbeläge verschlissen sind (optional wenn Zuspann-Wegsensor oder Belagverschleißanzeige).

Figur 1 zeigt ein fahrzeugtypisches Blockschaltbild für den Ablauf des erfindungsgemäßen Verfahrens zum Einfahren von Bremsbelägen
Figur 2 zeigt ein fahrzeugtypisches Blockschaltbild für den Ablauf des erfindungsgemäßen Verfahrens zum Rückbilden von Schrägverschleiß bei Bremsbelägen und
Figur 3 zeigt ein fahrzeugtypisches Blockschaltbild für den Ablauf des erfindungsgemäßen Verfahrens zum Regenerieren von verglasten Bremsbelägen.

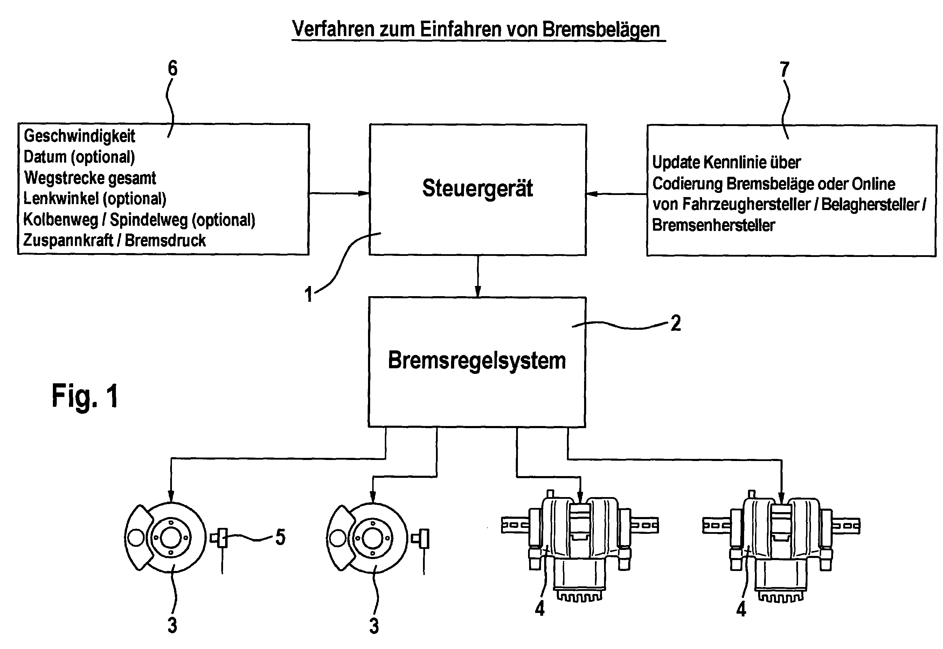

Figur 1 zeigt ein Steuergerät 1 in welches die gemessenen Parameter eingegeben werden und welches dann ein Brems-Regelsystem 2 zur Durchführung des erfindungsgemäßen Verfahrens ansteuert. Durch das Brems-Regelsystem 2 werden bei einem Fahrzeug Bremsen 3 an den Vorderrädern beziehungsweise Bremsen 4 an den Hinterrädern selbsttätig angesteuert, wodurch wie weiter oben beschrieben der Reibwert der Bremsbeläge verbessert wird. Die Bremsen können Detektoren 5 zur Messung der Fahrgeschwindigkeit des Fahrzeugs besitzen und hydraulisch (Bremsen 3) oder durch eine elektrische Kraft (Bremsen 4) angetrieben werden. Eine Messeinheit 6 kann das Steuergerät 1 mit geeigneten Messwerten versorgen welche in Figur 1 angegeben sind und aus welchen der erste und der dritte Parameter abgeleitet werden. Ein Datengeber 7 versorgt das Steuergerät 1 mit vom Fahrzeughersteller oder dem Hersteller der Bremsbeläge stammenden Daten.

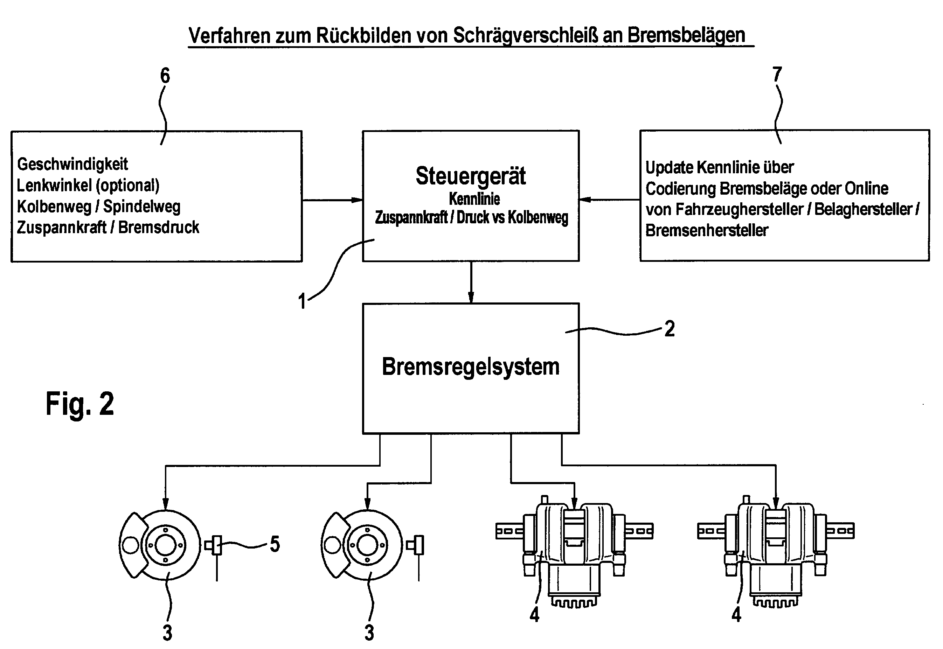

Figur 2 beschreibt analog ein Verfahren zum Rückbilden von Schrägverschleiß von Bremsbelägen. Der Unterschied besteht gegenüber dem Verfahren nach Figur 1 darin, dass dieses Verfahren nicht bei neuen Bremsbelägen benötigt wird und dementsprechend die Messung des Datums und/oder der Wegstrecke entfallen kann. Weiterhin sind in dem Steuergerät Kennlinien gespeichert, die die Zuspannkraft beziehungsweise den Druck in Abhängigkeit von dem Kolbenweg beschreiben.

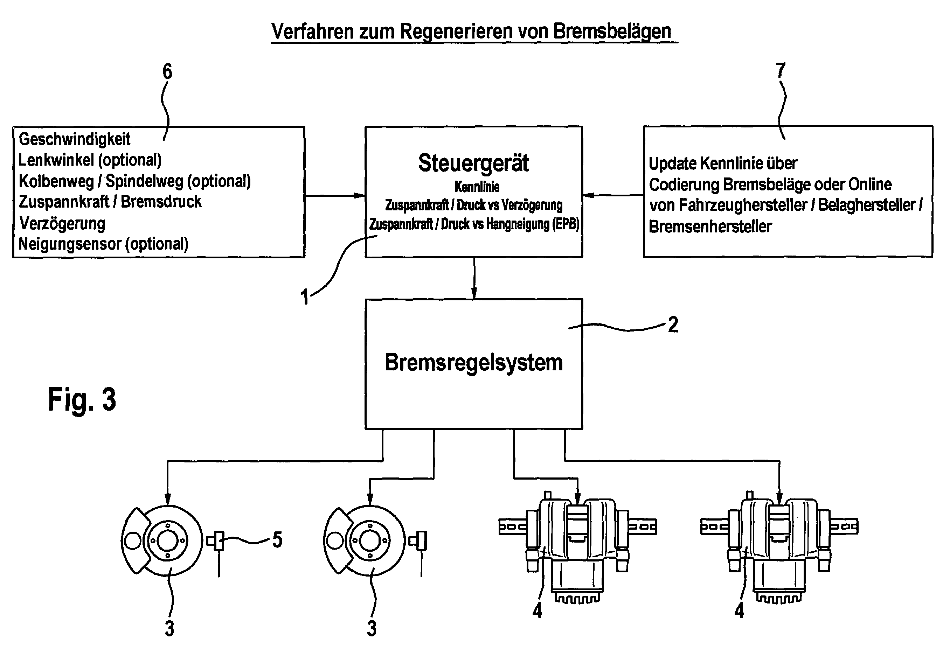

Figur 3 beschreibt analog ein Verfahren zum Regenerieren von verglasten Bremsbelägen. Der Unterschied besteht gegenüber dem Verfahren nach Figur 1 darin, dass in dem Steuergerät Kennlinien gespeichert sind, die die Zuspannkraft beziehungsweise den Druck in Abhängigkeit von dem Kolbenweg beschreiben oder die Zuspannkraft beziehungsweise den Druck in Abhängigkeit von der Hang-Neigung (beim Fahrzeug) bzw. Gewichtskraft beschreiben.

## Patentansprüche

1. Verfahren zur Verbesserung des Reibwertes von Bremsbelägen eines Brems-Regelsystems (2) mit Reibungsbremsen (3,4) eines Fahrzeugs umfassend ein Steuergerät (1), eine Messeinheit (6) die das Steuergerät (1) mit Messwerten versorgt, sowie mit einem Programm, um das Brems-Regelsystem (2) in Abhängigkeit von einem ersten gemessenen Parameter selbsttätig zu betätigen, und dass das Programm in Abhängigkeit von einem zweiten gemessenen Parameter beendet wird, **dadurch gekennzeichnet, dass** im System eine Kennlinie hinterlegt ist, und dass der erste Parameter gilt wenn gemessene Ist-Werte der Kennlinie nicht entsprechen, wobei das Programm die Reibungsbremse (3,4) in Abständen selbsttätig betätigt, und dass der zweite Parameter gilt, also das Programm abgeschlossen wird, wenn der Ist-Wert der abgelegten Kennlinie (Sollwert) entspricht.

2. Verfahren nach Anspruch 1, **dadurch gekennzeichnet, dass** in dem Steuergerät (1) Kennlinien gespeichert sind, die insbesondere die Zuspannkraft beziehungsweise den Druck in Abhängigkeit von dem Kolbenweg beschreiben.

3. Verfahren nach Anspruch 1 oder 2, **dadurch gekennzeichnet, dass** eine Steifigkeitskennlinie ausgewertet wird, und dass die erkannte Steifigkeitskennlinie mit einer hinterlegten Steifigkeitskennlinie verglichen wird.

4. Verfahren nach Anspruch 3, **dadurch gekennzeichnet, dass** die Steifigkeit mittelbar durch den für eine bestimmte Zuspannkraft bzw. Druck benötigten Zuspannweg der Reibungsbremse (3,4) bestimmt wird.

5. Verfahren nach Anspruch 1, **dadurch gekennzeichnet, dass** als Messeinheit (6) ein Verzögerungssensor, ein Lenkwinkelsensor, ein Neigungssensor, ein Geschwindigkeitsmesser, ein Wegsensor, ein Zuspann-Wegsensor, eine Belagverschleißanzeige und/oder ein Temperaturfühler insbesondere zur Deaktivierung vorgesehen sind.

6. Verfahren nach Anspruch 3, **dadurch gekennzeichnet, dass** ein Update einer Kennlinie durch Codierung Bremsbelag oder Online vorgesehen ist.

7. Verfahren nach einem oder mehreren der vorhergehenden Ansprüche, **dadurch gekennzeichnet, dass** die Bremsen (4) durch eine elektrische Kraft angetrieben werden.

8. Verfahren nach einem oder mehreren der vorhergehenden Ansprüche, **dadurch gekennzeichnet, dass** ein Datengeber (7) das Steuergerät (1) mit Daten vom Fahrzeughersteller oder dem Hersteller der Bremsbeläge versorgt.

## Claims

1. Method for improving the coefficient of friction of brake linings of a brake control system (2) having friction brakes (3, 4) of a vehicle comprising a control unit (1), a measuring unit (6) which supplies the control unit (1) with measured values, and having a program for automatically actuating the brake control system (2) as a function of a first measured parameter, and in that the program is ended as a function of a second measured parameter, **characterized in that** a characteristic curve is stored in the system, and **in that** the first parameter applies if measured actual values do not correspond to the characteristic curve, wherein the program automatically actuates the friction brake (3, 4) at intervals, and **in that** the second parameter applies, that is to say the program is terminated, if the actual value corresponds to the stored characteristic curve (set point value).

2. Method according to Claim 1, **characterized in that** characteristic curves which describe, in particular, the brake application force or the pressure as a function of the piston travel are stored in the control unit (1).

3. Method according to Claim 1 or 2, **characterized in that** a rigidity characteristic curve is evaluated, and **in that** the detected rigidity characteristic curve is compared with a stored rigidity characteristic curve.

4. Method according to Claim 3, **characterized in that** the rigidity is determined indirectly by means of the brake application travel of the friction brake (3, 4) which is required for a specific brake application force or pressure.

5. Method according to Claim 1, **characterized in that** a delay sensor, a steering angle sensor, an inclination sensor, a speedometer, a travel sensor, a brake application travel sensor, a lining wear display and/or a temperature sensor are provided as a measuring unit (6), in particular for the purpose of deactivation.

6. Method according to Claim 3, **characterized in that** an update of a characteristic curve is provided by encoding the brake lining or online.

7. Method according to one or more of the preceding claims, **characterized in that** the brakes (4) are driven by means of an electrical force.

8. Method according to one or more of the preceding claims, **characterized in that** a data generator (7) supplies the control unit (1) with data from the vehicle manufacturer or the manufacturer of the brake linings.

## Revendications

1. Procédé pour améliorer le coefficient de frottement de garnitures de frein d'un système de réglage de freins (2) comprenant des freins à friction (3, 4) d'un véhicule comprenant un appareil de commande (1), une unité de mesure (6) qui fournit des valeurs de mesure à l'appareil de commande (1) ainsi qu'un programme pour actionner automatiquement le système de réglage de freins (2) en fonction d'un premier paramètre mesuré, et en ce que le programme est terminé en fonction d'un deuxième paramètre mesuré, **caractérisé en ce qu'**une courbe caractéristique est consignée dans le système, et **en ce que** le premier paramètre est valable lorsque les valeurs réelles mesurées ne correspondent pas à la courbe caractéristique, le programme actionnant automatiquement le frein à friction (3, 4) à intervalles et **en ce que** le deuxième paramètre est valable, c'est-à-dire que le programme est coupé, lorsque la valeur réelle correspond à la courbe caractéristique consignée (valeur de consigne).

2. Procédé selon la revendication 1, **caractérisé en ce que** des courbes caractéristiques sont mémorisées dans l'appareil de commande (1) lesquelles décrivent notamment la force de serrage, ou la pression, en fonction de la course du piston.

3. Procédé selon la revendication 1 ou 2, **caractérisé en ce qu'**une courbe caractéristique de rigidité est analysée, et **en ce que** la courbe caractéristique de rigidité détectée est comparée à une courbe caractéristique de rigidité consignée.

4. Procédé selon la revendication 3, **caractérisé en ce que** la rigidité est déterminée de manière indirecte par la course de serrage du frein à friction (3, 4) nécessaire pour une force de serrage ou une pression déterminée.

5. Procédé selon la revendication 1, **caractérisé en ce qu'**un capteur de décélération, un capteur d'angle de braquage, un capteur d'inclinaison, un capteur de vitesse, un capteur de position, un capteur de course de serrage, un affichage de l'usure des garnitures et/ou un palpeur de température sont prévus en tant qu'unité de mesure (6), notamment pour la désactivation.

6. Procédé selon la revendication 3, **caractérisé en ce qu'**une mise à jour d'une courbe caractéristique est prévue par codage de la garniture de freins ou en ligne.

7. Procédé selon l'une quelconque ou plusieurs des revendications précédentes, **caractérisé en ce que** les freins (4) sont entraînés par une force électrique.

8. Procédé selon l'une quelconque ou plusieurs des revendications précédentes, **caractérisé en ce qu'**un générateur de données (7) fournit à l'appareil de commande (1) des données provenant du fabricant du véhicule ou du fabricant des garnitures de freins.
